# EUROPEAN PATENT APPLICATION

(11) **EP 4 439 429 A1**
(43) Date of publication of application: **02.10.2024**
(21) Application number: 23220875.1
(22) Date of filing: 30.12.2023
(51) Int. Cl.: G06Q 10/0875, G06Q 10/087, G06Q 10/10, G06N 3/08, G06N 20/00, G06N 20/20

(54) **RISK ASSESSMENT WITH PRESCRIPTIVE RECOMMENDATIONS**

(30) Priority: 31.03.2023 US 202318129691
(71) Applicant: NCR Voyix Corporation, Atlanta, GA 30308 (US)
(72) Inventor: MAROM, Shay, 3604304 Kiryat Tiv'on (IL); LASERSON, Itamar David, 5405602 Givat Shmuel (IL)
(74) Representative: Secerna LLP

(57) **Abstract**

Transaction, customer, employee, security, and sales forecast data are obtained for a store. Known actions to prevent shrink events are maintained. Transactions associated with shrink events are identified and features are derived. The data is labeled and used to train a machinelearning model to produce, as output, scores for the features, combinations of the features, and prescriptive action identifiers. Each score represents a likelihood of shrink for a given feature or a given combination of features. The output scores and prescriptive action identifiers are predicted at intervals over a period of future time. At each interval, the output for remaining intervals is updated based on real-time store data generated for transactions at the store in a previous interval. An action identifier can be provided to a security application causing the application to increase sensitivity of security detection on a terminal based on the predicted likelihood of shrink.

## Description

According to recent studies, retailers in the U.S. alone lose $47 billion annually to shrink, amounting to about 2% of their annual revenues. About one-third of shrink is associated with shoplifting, which mostly occurs at self-checkout lanes. An additional 40% is employee-related shrink which may be deliberate or non-deliberate due to lack of proper employee training. The remaining shrink can be attributed to administrative errors and perishable items lost to spoilage.

Retailers invest billions of dollars in fraud and theft detection technologies, such as artificial intelligence (AI), computer vision, cashier profiling, and anomaly detection. These technologies are important to reducing shrink but are largely focused on detection of shrink instead of prevention of future shrink.

Furthermore, even when predictive shrink technologies are available in the industry, they do not indicate prescriptive actions that can be taken to prevent shrink. Instead, such technologies rely on the intuition, experience, and discretion of retail staff to determine what, if any, actions are needed to prevent predicted shrink from occurring.

In a first aspect of the present invention, there is provided a method, comprising: obtaining historical store data from store data sources as training data; labeling the training data with features; labeling at least a portion of the training data with shrink events and one or more prescriptive action identifiers for each of the shrink events; training a machine learning model (MLM) on the features from the labeled training data to predict sets of scores for the shrink events along with corresponding prescriptive action identifiers, wherein each shrink score is associated with a certain feature or a certain combination of the features, and wherein each set of scores is associated with a given interval of time in a period of time; obtaining store data for a current interval of time over the period of time; extracting and labeling current features for the store data; providing the labeled store data as input to the MLM; receiving current sets of scores with the corresponding prescriptive action identifiers as output from the MLM, wherein each set corresponds to a particular interval of time within the period; and providing the current sets of scores with the corresponding prescriptive action identifiers as input to at least one of a store application, a store workflow, or a store system.

In some embodiments, the method further comprises: iterating to the obtaining of the store data at an end of the current interval of time.

In some embodiments, obtaining the historical store data further includes obtaining the historical store data from a store's transaction system, security system, forecasting system, and data stores.

In some embodiments, obtaining the historical store data further includes organizing the training data into data sets by transaction and time.

In some embodiments, labeling further includes obtaining, labeling, and adding at least one feature in each of the data sets based on a calendar date and a store location.

In some embodiments, labeling further includes assigning the corresponding prescriptive actions identifiers based on a mapping to the shrink events.

In some embodiments, providing the current sets of scores further includes providing the sets of scores to a heatmap interface.

In some embodiments, providing the current sets of scores further includes providing the sets of scores as an instruction to a security application to increase security detection sensitive in a store department or at a store terminal.

In some embodiments, providing the current sets of scores further includes instructing the security application to initiate the instruction at a designated time in the future for a designated length of time.

In some embodiments, providing the current sets of scores further includes sending a recommended action to a store manager application to take at a designated area within the store at a designated time in the future.

In a further aspect of the present invention, there is provided a method, comprising: organizing store data for a store into featured labeled data for features indicative of shrink events at the store; processing a machine-learning model (MLM) with the feature labeled data and obtaining sets of scores that predict future shrink events at the store in intervals of time over a given period, wherein each score is associated with a certain feature or a certain combination of features, and wherein each score is associated with one or more prescriptive actions to take to avoid a corresponding future shrink event; and integrating the sets of scores into one or more of a store application, a store workflow, or a store system.

In some embodiments, the method further comprises: iterating to the organizing at an end of each interval of time.

In some embodiments, organizing further includes obtaining a first portion of the featured labeled data by providing the store data as input to an initial MLM and receiving as output from the initial MLM the portion.

In some embodiments, the method further comprises: generating a second portion of the featured labeled data by mapping each shrink event to one or more certain prescriptive actions.

In some embodiments, the method further comprises: providing the first portion of the featured labeled data as input to a heatmap interface.

In some embodiments, the method further comprises: extending the heatmap interface with the second portion to provide the corresponding one or more certain prescriptive actions within the heatmap interface.

In some embodiments, integrating further includes mapping a certain prescriptive action associated with a certain score for a particular feature or a particular combination of features to an instruction for a security application of the store and sending the instruction to the security application prior to a given interval of time associated with the certain score.

In some embodiments, integrating further includes mapping a certain prescriptive action to a manager recommendation for a store department, a store item, a store item classification, a store employee, or a store customer, and sending the manager recommendation to a device operated by a store manager.

In a yet further aspect of the present invention, there is provided a system, comprising: a cloud server comprising at least one processor and a non-transitory computer-readable storage medium, the non-transitory computer-readable storage medium comprising executable instructions, wherein the executable instructions, when executed by the at least one processor cause the at least one processor to perform operations comprising: processing a first machine learning model with store data during a current interval of time and receiving as output a set of scores, wherein each score predicts shrink events at a store by individual features and by combinations of the features; iterating the processing for a next interval of time using forecasting data for the store until a further period of time is reached; and providing the sets of scores produced for the period from the processing and the iterating to a store application, a store workflow, or a store system.

In some embodiments, the executable instructions when executed by the at least one processor further cause the processor to perform additional operations, comprising: providing the sets of scores to a heatmap interface that links the features to resources of the store within a planogram of the store and that colors the resources based on the corresponding scores, wherein the heatmap interface includes a timeline function to animate the planogram with the colored resourced over the period, and wherein when a given resource or a given combination of resources is selected a popup window displays the corresponding prescriptive actions necessary to avoid a corresponding shrink event.

In various embodiments, system and methods for predicting risk associated with retail shrink and prescribing and/or processing specific actions to mitigate any predicted shrink are presented. Data relevant to store resources, shrink events, and forecasted sales of the store are collected from store systems and store data sources. A prescriptive action identifier table is mapped to shrink events and maintained. Features are derived from the collected data and the features are labeled with the shrink events and prescriptive action identifiers in a training data set. A machine learning model (MLM) is trained on the training data set to produce predictive shrink risk scores for each of the features and combinations of features and to produce prescriptive action identifiers for any given feature/combination score above a threshold value. The MLM is trained to produce the scores and the prescriptive action identifiers at predefined intervals over a given period of time that extends from a current time to a future time. The MLM is updated at each interval of time to include updated data supplied from the store's transaction system, security system, and forecasting system.

The predicted scores and prescriptive action identifiers are integrated into applications and systems of the store for purposes of proactively taking the prescribed actions to avoid a shrink incident at a time in the future. In an embodiment, the predicted scores and prescriptive action identifiers are integrated into an interactive and animated heatmap interface. The interface permits a store employee, for example, to visualize store resources and areas of the store that are predicted to be at a higher risk for a shrink incident over a given period of time. The features, resources, and combinations of features may be color-coded or may include other indicia based on their corresponding scores that allows a store employee to quickly visually discern high-risk areas for shrink. Userselection of resources from the heatmap interface may cause the corresponding prescriptive actions associated with the selected resources to be presented to the user.

FIG. 1 is a diagram of a system for predicting risk associated with retail shrink and recommending and/or processing specific actions to mitigate any predicted shrink, according to an example embodiment.

FIG. 2 is a flow diagram of a method for predicting risk associated with retail shrink and recommending and/or processing specific actions to mitigate any predicted shrink, according to an example embodiment.

FIG. 3 is a flow diagram of another method for predicting risk associated with retail shrink and recommending and/or processing specific actions to mitigate any predicted shrink, according to an example embodiment.

As stated above, shrink is an expensive problem suffered by retailers for a variety of reasons. Many retailers have a variety of technologies in place for detecting shrink-based events when they potentially occur, but few retailers deploy technology that predicts future shrink. Even if a retailer deploys a shrink prediction technology, such technology lacks an ability to recommend or automatically process specific actions to mitigate any predicted shrink. Moreover, existing shrink prediction technology provides coarse-grained prediction information and does not provide fine-grained actionable information for the retailer.

For example, a retailer may be warned that theft is likely to occur at a given store on a given day, but the retailer is not provided enough information to know that the theft is likely going to happen at a particular cashier-assisted terminal or self-service terminal, which is located within a meat department of a particular retailer's store, late in the afternoon. Further, even if the details of predicted shrink are available, the retail staff may not know which of a plurality of potential actions to take to prevent the shrink. For example, would a security guard posted at a terminal stop the theft; would a visible camera directed on the terminal stop the theft; would taking the terminal offline prevent the theft; would a discussion with the casher of the terminal prevent the theft, etc.

As is described in more detail herein and below, real-time risk assessments of shrink are provided to retailers, which predict a specific condition or a specific set of conditions most likely to be associated with a potential shrink event. The predictions can be provided in a time series based on calendar date and time of day over a user-defined interval of time. The predictions are continuously updated at second intervals of time throughout a business day of a store based on real-time data being reported from a given store. Each prediction is also associated with automated or prescriptive actions that are to be processed/taken in order to reduce the likelihood that a predicted shrink is going to happen on a predicted future date and time. The subjective discretion and intuition of retailer managers are replaced by machine learning generated objective and data-driven prescriptive actions.

A MLM is derived using machine learning forecasting on a time series, which combines time series modules such as ARIMA (autoregressive integrated moving average) together with regression analysis using random forest for the residuals of the time series, creating a complete model which can not only predict the upcoming shrink events but also find the main causals of those predictions. The machine learning model (MLM) is trained to learn shrink events from metrics and events produced by transaction systems and security systems of a store and the MLM is trained on selective data or metrics associated with the store's customer and employee data store.

The security systems evaluate real-time video captured at the store and produce security metrics and security events based on computer vision analysis and other data analysis, some of which utilizes other MLMs. The transaction systems produce transaction metrics and transaction events based on transaction data captured for transactions being processed at the store. The customer data store provides an identifier for the customers, an indication if a customer is a loyalty member or not, and indications as to whether there have been any known recorded incidents involving the customer, such as a bounced check, a declined credit card, a theft incident, etc. The employee data store provides employee identifiers, past and planned work schedules for employees, terminal identifiers for terminals operated by employees on past and planned work days, and any employee performance metrics, such as an employee performance grade, length of employment, total hours worked, transactions performance rate, transaction void rate, transaction price override rate, etc.

Future predicted metrics and events are derived using the store's sales forecasting system over a given period of time, such as over a day, a week, a few weeks, a month, etc. For example, a store's forecasting system can predict the movement or turnover rates of items, customer traffic by channel (e.g., self-service terminals (SSTs), point-of-sale (POS) terminals, etc.), customer traffic by store department, etc. The fine-grain sales prediction data translates or is mapped into projected metrics and projected events. The actual and projected metrics and events over the given interval of time are evaluated to derive features indicative of or relevant to shrink events for a given store. Moreover, certain customer and employee data are obtained as additional features. The given interval of time is broken into a time series that extends from a current time to an end time in the future. For example, the interval of time (which may be user-customizable) can be an hour, a half day, a few hours, a full day, etc, while the period of time (which also may be user-customizable) can be a week, two weeks, a month, etc. Features derived and/or obtained for each interval in the given period are provided as input features to train the MLM.

The metrics, events, certain customer data, and certain employee data are organized by transaction into data sets using a transaction identifier, a terminal identifier, a cashier identifier, a customer identifier, and/or time stamps associated with a given transaction. The training data sets are further evaluated and labeled for actual shrink events and shrink data produced for any given transaction by the store's transaction system or security system. In some cases, a past transaction can have its metrics of events updated based on a shrink event that was determined to have occurred after the transaction was processed at the store. These later-added shrink events or flagged transactions are also labeled.

The shrink events for any given transaction data set are also mapped to one or more prescriptive actions. The prescriptive actions, in one embodiment, are housed separately in a table with unique action identifiers. For each transaction data set labeled with a shrink event and shrink data, the corresponding prescriptive action identifiers are labeled and inserted into the transaction data set.

The feature labeled transaction data sets are then passed as input to the MLM for purposes of providing a prediction or a percentage value from 0 to 100 indicative of the likelihood that a given transaction involves a shrink incident, and when a shrink incident is predicted to occur with at least a threshold likelihood, providing one or more prescriptive action identifiers. The MLM uses the features provided in the transaction data sets and any labeled shrink events with corresponding labeled prescriptive action identifiers to configure itself for providing both the shrink prediction confidence level and the prescriptive action identifier during a training session for each interval of time in the given period of time of the time series, the given period extending from a current time to an end time in the future.

In example embodiments, the features are derived from the actual metrics, predicted metrics, actual events, predicted events, certain customer data, and certain employee data. In an embodiment, the features include 1) Time - the risk of shrink over time, including day of the week, time of day, weekday versus weekend, holiday versus regular business day, seasonality, etc.; 2) Basket Content - the risk for shrink by item or product, store departments, item categories, item sub categories, brands, etc. for customer basket items of customers shopping at a given store; 3) Checkout Channel - the risk of shrink based on the checkout method used for a given transaction, such as casher-assisted at a point-of-sale (POS) terminal, self-checkout at a self-service terminal (SST), self-checkout via a mobile application or mobile service, etc.; 4) Cashier - the risk of shrink by a specific cashier performing a given checkout; 5) Weather - the risk of shrink based on the current weather and hourly weather predictions provided by an online weather service for a given location of a given store, for example, weather characteristics outside the store (e.g., sunny, rain, snow, etc.), the outside temperature in relation to a threshold temperature, and so forth; 6) Loyalty Members - the risk of shrink by specific recurring members of the store or shoppers identified uniquely in other manners; and 7) Method of Payment - the risk of shrink based on the types of payments being used for transactions in the store, such as credit card, bank card, debit card, gift card, check, cash, etc.

Verified shrink events for which shrink was identified are labeled and provided as input to the MLM during training. The expected output from the MLM are scores predicting a likelihood of shrink on a per feature basis, likelihood of shrink based on combinations of the features with one another, and prescriptive action identifiers for any likelihood of shrink above a predefined threshold percentage. A balanced training data set, which includes transaction data sets with the labeled features, shrink events, and prescriptive action identifiers, is used to train and test the F1 score of the MLM. When the F1 score reaches a threshold, the MLM may be released to production for providing real-time shrink assessment of shrink with prescriptive action recommendations for a given store.

In an embodiment, a first heatmap-producing MLM is trained to produce a heat map which maps predictive shrink events to locations and resources of the store using the features discussed above over a given period of time (e.g., hours of operation of the store) and using a planogram associated with the store. In this embodiment, output from the first heatmap-producing MLM can be used as input to the MLM discussed above during training when the output from the first heatmap-producing MLM is further labeled with the prescriptive action identifiers. In this embodiment, the projected metrics and events are derived from the projected sales data of the forecasting system, feature labeled, and passed as input to the first heatmap-producing MLM for each interval of time (e.g., for each day) within the given period of time (e.g., week, two weeks, month, etc.). In this way, output from the first heatmap-producing MLM is provided as feature input to the MLM and the MLM provides any predicted prescriptive action identifier based on the output provided by the first heatmap-producing MLM.

The output predictions provided by the MLM are processed in a variety of manners. For example, a graphical user interface (GUI) receives the shrink prediction scores as input from the MLM and uses the scores to render a dynamic and real-time visual heatmap of the store on a user device's display with the features colored or otherwise marked with indicia indicative of their corresponding MLM-provided scores or predictive shrink percentages. In an embodiment, combinations of the features are selectable from the GUI for a user to visualize the corresponding combination score as a unique color (i.e., unique shrink score) associated with the selected features. In an embodiment, when a feature or resource is selected within the GUI, a popup window displays the prescriptive action(s) that are being recommended with respect to the selected feature or resource in order to avoid a predicted shrink event.

As another example, the MLM-provided prescriptive action identifiers are provided to store applications, store systems, and/or store workflows, via an application programming interface (API), as a cloud-based service. The applications, systems, and/or workflows use the scores for the purposes of automatically processing the prescriptive actions by increasing the sensitivity settings of security detection algorithms, sending alerts, etc. For example, a terminal's transaction monitoring application, in response to receiving a prescriptive action identifier, can decrease a threshold value associated with identifying scan barcode avoidance or can bias a security weighting algorithm for the terminal to automatically increase the sensitivity of theft detection on the terminal. The prescriptive action identifier can drive or influence automated security detection associated with applications of the store's security system and/or transaction system.

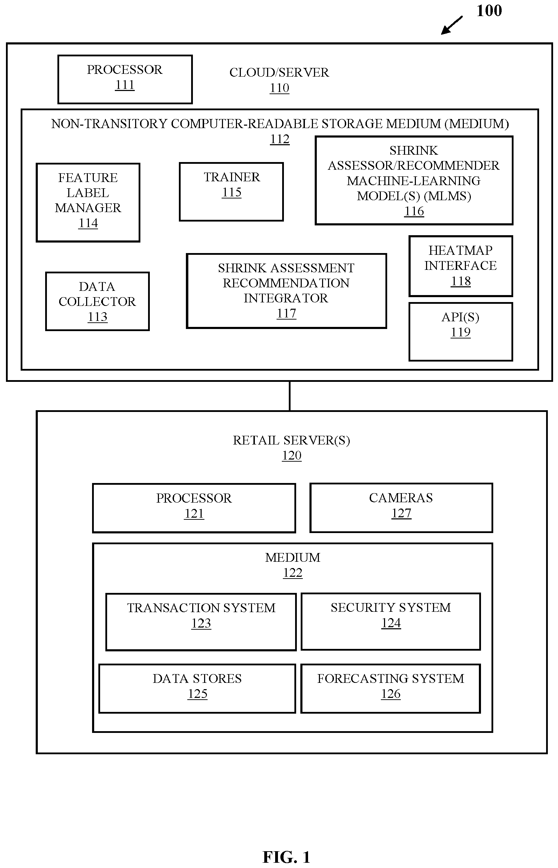

The above-referenced embodiments and other embodiments are now discussed with the FIGS. beginning with FIG. 1. FIG. 1 is a diagram of a system 100 for predicting risk associated with retail shrink and recommending and/or processing specific actions to mitigate any predicted shrink, according to an example embodiment. It is to be noted that the components are shown schematically in greatly simplified form, with only those components relevant to understanding of the embodiments being illustrated.

Furthermore, the various components illustrated in FIG. 1 and their arrangement is presented for purposes of illustration only. It is to be noted that other arrangements with more or less components are possible without departing from the teachings of fine-grained shrink risk assessments on a per feature/feature combination basis with prescriptive action recommendations for a given store as presented herein and below.

System 100 includes a cloud 110 or a server 110 (hereinafter just "cloud 110") and a plurality of enterprise servers 120. Cloud 110 includes a processor 111 and a non-transitory computer-readable storage medium (hereinafter just "medium") 112, which includes executable instructions for a data collector 113, feature label manager 114, an MLM trainer 115, one or more shrink assessor/recommender MLMs 116, a shrink assessment recommendation integrator 118, an optional heatmap interface 118, and one or more integration APIs 119. Processor 111 obtains or is provided the executable instructions from medium 112 causing processor 111 to perform operations discussed herein and below with respect to 113-119.

Each retailer server 120 includes a processor 121 and a medium 122, which includes executable instructions for a transaction system 123, a security system 124, a plurality of data stores 125, and a forecasting system 126. Processor 121 obtains or is provided the executable instructions from medium 122 causing processor 121 to perform operations discussed herein and below with respect to 123-124 and 126. It is to be noted that retailer server 120 can include a variety of other systems, such as an inventory system, a maintenance and support system, a scheduling system, etc. Moreover, access to data stores 126 is through APIs and/or data store interfaces and applications.

Each retail server 120 also include cameras 127, which capture video and/or images of areas situated throughout a given store of a retailer. The images are stored in storage and/or streamed to network-accessible storage locations, which are accessible to the corresponding security system 124 and data collector 113 of cloud 110.

The data stores 125 include a variety of information maintained by the corresponding retailer. For example, a loyalty data store 125 includes records for customers of the retailer, where each record may include customer identifying data and contact data, customer transaction history data, customer promotions offered, customer redeemed promotions, customer preferences or profiles, customer incidents (e.g., bounced check, declined credit card, theft, etc.). etc. An employee data store includes records per employee of the store, where each record may include employee identifying data and contact data, dates and times of previous work days, current scheduled days and times for future work days, terminal identifiers for the terminals operated by the employee on each of previous work days, total number of transactions performed by the employee on each previous work day, total number of price overrides performed on each previous work day, total number of returns performed on each previous work day, total number of transaction item voids performed on each previous work day, etc. A product data store includes item identifiers for products, item classifications, item barcodes, item descriptions, item pricing, etc.

A retailer's transaction system 123 includes transaction data for transactions of the retailer, where each transaction may include a record with a store identifier for the retailer's store that performed the transaction, a transaction type to indicate whether the transaction was performed online or in the store, an indication as to whether the transaction was a return or whether it was a purchase transaction, terminal identifier for the terminal that performed the transaction when the transaction was performed in store, customer identifier for the customer of the transaction, cashier identifier for a cashier when the customer was assisted with checkout, calendar date of the transaction, time of the transaction, item codes for items purchased in the transaction, item prices, item categories, item discounts, redeemed promotions, etc. The transaction system 123 also includes sales and loss information per store of the retailer such as total sales within a given period of time, the overall sales for the period, sales by item for the period, sales by item category for the period, sales by store department for the period, shrink per item for the period, shrink per item category for the period, shrink per store department for the period, etc.

A retailer's forecasting system 126 includes forecasting data for a given store of the retailer and for the retailer as a whole. The forecasting data includes projected item sales by item, by item category, by terminal, by store department, etc. From the predicted sales volume on a given day or even a given hour within a day, customer traffic can be derived on a per store department and per terminal basis.

In an embodiment, a store data store 125 includes a planogram which is a map of a given store for the retailer along with labels that identify departments, ingress and egress points, shelves, and displays. Each store's planogram also includes item codes for the physical placement and location of each item or item category within the store on shelves, on displays, and in departments of the corresponding store.

A retailer's security system 124 maintains a plurality of computer-vision metrics for analysis of video or images captured by a store's cameras 127. Some of these metrics are related to shrink events for which theft was identified or vision-based actions that were flagged as being indicative of potential theft. The security system 124 includes a variety of security-based applications, some of which are based on computer vision analysis, some of which are based on transaction data for a given transaction obtained from the corresponding transaction system 123, and some of which are based on a combination of computer vision analysis and transaction data.

Security applications of system 124 also process a variety of algorithms that analyze video along with customer data and employee data from the data stores 124 and transaction data from system 123 to provide scores or predictions with respect to potential cashier and/or customer theft based on a variety of factors such as the basket of items, the identity of the cashier, and the identity of the customer, when known. In an embodiment, the security applications use one or more additional MLMs to provide the risk scores for a given transaction. The risk scores are retained as metrics in security records by transaction, by cashier, and by customer for each store. Furthermore, each security record also includes a link to the corresponding video associated with any given transaction captured by the store's cameras 127.

In an embodiment, the security system 124 is independent of the retail server 120 and provided as a service by cloud 110 or by a third-party server via an API to retailer server 120. In an embodiment, security applications utilized by the security system 124 are independent of retail server 120 and provide vision-based analysis of video captured by cameras 127 back to security system 124 on retail server 120.

Initially, data collector 113 uses one or more APIs 119 to obtain input data, which is used to train MLM 116 on information associated with a given store of a retailer's transaction system 123, security system 124, data stores 125, forecasting system, and optionally the store's planogram. A training period of time is established; for example, 6 months to a year's worth of historical input data.

Feature label manager 114 correlates the input data based on a given transaction at the store. For example, data obtained from the transaction system 123, the security system 124, the data stores 125, and forecasting system 126 are assembled or merged with one another to define a transaction data set of input data that is associated with a single transaction processed by transaction system 123. The calendar date and time is obtained for each transaction data set and used to obtain weather data from, for example, web-based weather service for a known location of the store on the corresponding date and time of day. The weather data is labeled and inserted into each transaction data set. The calendar data is then compared against a known holiday schedule to identify whether a given transaction occurred on a holiday. When a holiday is detected, feature label manager 114 labels and inserts a holiday identifier for the corresponding holiday into the transaction data set for the transaction. Each transaction data set is then analyzed by feature label manager 114 to label the calendar date, time of day, item identifiers for the basket of items purchased in the transaction, cashier identifier for any cashier that performed the transaction, customer identifier for the customer, an indication as to whether the customer is a loyalty member, the terminal type indicating whether the terminal is a POS terminal or an SST for the transaction, and the type of payment used.

Any transaction data sets that include one or more shrink events as obtained from the security logs of the security system 124 are labeled within the transaction data sets. Shrink-event labeled transaction data sets are the expected output which is expected from the MLM 116 following training after receiving the other labeled input features of a given transaction data set from the trainer 115. Additionally, a table of action identifiers associated with each security event and its corresponding data are used to label one or more prescriptive action identifiers within each transaction data set that includes a labeled security event. The action identifier is also expected as output from the MLM 116 with the score for each feature and each combination of features.

During training, trainer 115 organizes transaction data sets in a time series that includes intervals of time within a set overall period of time. For example, the interval of time may be set to 15 minutes and the overall period of time may be set to 1 week. A first interval of time's worth of transaction data sets is obtained, and the remaining intervals of time are based on historical forecasted data for transactions, items, departments, and terminals of the store at the time that the first interval was occurring. The forecasted data for each of the remaining intervals beyond the first interval for the overall period of time (e.g., 1 week) is passed to the MLM 116 during training along with the first interval of time's worth of transaction data sets. This permits the MLM 116 to use the first interval of time labeled data sets and the forecasted data to provide sets of scores per feature and per combination of features for the intervals across the entire period.

A training data set, which includes each of the labeled transaction sets, is passed by feature label manager 114 to trainer 115. The training data set is broken into two portions. A first portion is provided by trainer 115 as input to the MLM 116 for training during a training session and a second portion is provided by the trainer 115 as input to the MLM 116 for testing the F1 score after training. Once the F1 score is at or above a threshold value, trainer 115 releases the MLM 116 for production and notifies the shrink assessment integrator 117.

In an embodiment, any security application scores produced to provide a likelihood of shrink with respect to a given basket of items, a given cashier, or a given customer are retained and labeled by feature label manager 114 within the training data set. These scores may be produced through other MLMs and/or other heuristic and statistical-based algorithms and leveraged as additional features fed to the MLM 116 by trainer 115 during a training session for the MLM 116.

Data collector 113 obtains real-time and live transaction data, security log data, and forecasting data along with the corresponding matching customer data and employee data from transaction system 123, security system 124, data stores 125, and forecasting system 126 once MLM 116 is released into production for a given store of a retailer. The data is obtained by feature label manager 114, merged into live transaction data sets, labeled with the features, and passed to MLM 116 as input during each interval of time in an overall period of time. Each interval of time includes the forecasted data currently predicted by the forecasting system 126 for the whole period of time so that the MLM 116 can provide sets of scores and corresponding action identifiers for each interval across the whole period during each iteration/interval of time that the MLM 116 is processed on live and real-time store data.

MLM 116 produces, as output, shrink prediction scores for each feature and combination of features. Each score represents a likelihood or probability from 0 to 1 or a percentage from 0 to 100 that a given feature or a given combination of features is going to result in shrink within the store. Each feature or combination of features having a score above a threshold is also provided in combination with one or more action identifiers for actions to be taken to avoid the predicted shrink. Furthermore, the MLM 116 provides sets of scores, each score set corresponding to a current or future interval of time up to a preset period of time in the future, such as up to a week into the future.

In an embodiment, the MLM 116 produces sets of scores for business hours of a store over a period of time of a week into the future in predefined intervals of time. For example, for a given business day in which a store opens at 8:00 am and closes at 10:00 pm, the MLM 116 is provided with forecasted data from the forecasting system 126 that covers a configurable interval of time (e.g., a week into the future) as well as actual store data over a historical time period (e.g., a prior week). The MLM 116 provides, as output, scores for the features and the combination of features along with the predicted action identifiers at each interval of time projected out from a current interval of time to a week into the future, such as for each half hour or each hour of operation of the store beginning at 8:00 am and ending at 10:00 pm for a week's worth of business days. Each interval maps to a corresponding portion of a given business day and each interval includes its own set of scores for the features and combination of features and corresponding action identifiers. At each current interval of time, updated sets of scores for the remaining business days and hours of the store included in the overall period are provided by the MLM 116. So, the MLM 116 provides a time series for a preset period of time and continuously updates predictions for the period of time at predetermined intervals within the period based on current data being received from the store.

In an embodiment, heatmap interface 118 is configured to use a planogram 126 for a given store as a template or as a background image over which icons and labels are overlaid to represent the resources of the store. The resources are identified via identifiers maintained by the store in the transaction system 123, security system 124, data stores 125, and a store's planogram. For example, resources are mapped to icons or graphic images for shelves, terminals, store items, aisles, displays, departments, ingress and egress points, customers, cashiers, etc. The planogram 126 details the locations or physical areas of resources relative to one another and a layout of the resources within the store. Heatmap interface 118 receives the features and the combination of features scores produced by the MLM 116 and assigns a unique color based on the scores to the icons or the graphical images and superimposes the icons/images onto the background image of the store's layout provided by the planogram 126. The heatmap interface 118 also animates the overlaid and colored resource icons/images by time intervals for the present time period of the store in a given week, a few weeks, a month, etc. For example, assuming a set of scores and action identifiers is provided for every 30 minutes during which the store is open, a timeline function or option can be presented within a user interface to a user which when moved forward projects a future time during the business day or a further business day and depicts the corresponding resources with their colors based on their resource scores at that time during the business day. Each resource is selectable to generate a popup window that includes labeled descriptions for the corresponding predicted action identifiers associated with the corresponding selected resource of the heatmap.

A store manager can access the heatmap interface 118 via a user device and receive a snapshot visualization at any point during the business day for risk assessment of shrink through the colored resources; the color gradations of the resources map to MLM predicted scores. The action identifiers associated with any given risk assessment is visible within the heatmap or is displayed when a corresponding resource is selected by the store manager; the scores of a given resource of combination of resources map to their corresponding MLM predicted action identifiers.

Heatmap interface 118 also allows the store manager to interact with the icons or images representing the resources for purposes of selecting multiple resources within a given area of the store during a given interval of time for the business day. In response to a selection of a combination of resources, the heatmap interface 118 adjust the score-based colors of the combination based on the underlying combination score predicted by the MLM 116. The heatmap interface 118 also adjusted the predicted action identifiers associated with any selected resource or combination of resource such that the prescriptive actions to take are visually discernable by the user of interface 118 with the risk assessment scores.

For example, baskets with items associated with a "meat category" (e.g., item category is meat) are illustrated in the heatmap interface 118 with a higher shrink risk score or darker color red for SSTs during late hours of the business day. The prescriptive action identifier is to ensure that the barcode labels on meat packages are properly oriented and placed on the packaging wrap and to train staff to identify a best technique to have a scanner read the barcode labels of the meat packages.

As another example, a specific cashier has a high risk for undeliberate shrink, which is illustrated in darker red within the heatmap interface, in large baskets that contain many products from the produce department. The prescriptive action identifier is to train the cashier to slow down and pay more attention to detail with large baskets of produce and to ask for assistance if the cashier is unsure what a produce item is.

In another instance, a specific new cashier in the store has a shrink high risk due to non-deliberate actions of unscanned items during rush hours of the store, which may show a correlation that the barcodes with embedded weights of certain items are difficult to scan properly. The prescriptive action is to train the cashier to be more detailed items and not let rush hour unsettle the cashier and to train the cashier to quickly identify the embedded weights and scan the barcodes properly for the certain items in question.

In yet another situation, the meat department suffers from relative high-risk scores at SSTs during cold days outside of the store, which may show a correlation to customers putting items in jackets being worn. The prescriptive action is to increase the sensitivity to detecting theft on cold days in computer-vision security applications. This can be done automatically through API 119 by instructing the security application to change increase a detection sensitive setting on days that are predicted to be colder than a threshold temperature.

In another example, a transaction of a specific loyalty member has a higher risk, which could indicate sweethearting with a cashier at the store. The prescriptive action is to set a security alert when the loyalty member is identified within the store through the security system 124 and raise an alert if the cashier is on duty for staff or automated security applications to closely monitor any transaction with both the member and the cashier within the store.

In yet another case, cash transactions show a higher-risk score than payments with other payment methods during rush hours of the store. The prescriptive action is to train staff on handling cash better and increase computer vision cashier tracking and monitoring within the security system 124.

In an embodiment, the prescriptive action identifiers for scores above a threshold score are integrated into existing workflows associated with a retailer's transaction system 123 and security system 124. Integrator 117 uses APIs 119 to report the prescriptive action identifiers to applications within the existing workflows. For example, when a given department is assigned a risk score above a threshold a notification application within the transaction system 123 sends an alert to a store manager's device instructing the manager to visit that department and observe the activity during the high-risk period of time. Another application may be notified to suggest that the manager train cashiers on how to scan heavy meat packaged items, strengthen security settings within certain departments of the store, trigger security alerts on high-risk items and shoppers. The reported feature and combination of features scores can also be used in store applications and workflows to reduce security and resource friction in areas receiving low shrink risk scores so that the resources and security can be more properly allocated and focused on higher risk areas of the store.

One now appreciates how fine-grained resource-based shrink assessments and prescriptive actions are provided over a given period of time for a store. The risk assessment scores, and the prescriptive actions are mapped graphically to a layout of the store within a heatmap interface 118. The heatmap interface 118 is animated over the given period of time and the heatmap interface 118 interactive to combinations of resources to be selected and grouped together for purposes of visualizing the risk of a resource combination along with assigned prescriptive actions to take. Not only are shrink incidents predicted over a given period of time but proactive actions are predicted to mitigate the occurrence of the incidents in the future.

The risk shrink scores and corresponding prescriptive action identifiers are continuously updated with real-time store data provided by retailer systems 123, 124, and 126 for each interval during a current business day and over a given period of time. The MLM 116 is trained on relevant shrink correlated dimensions for resources of the store to provide predictive shrink risk assessment scores for not only each of the resource but also combinations of the resources. Scores above a threshold are assigned prescriptive recommended actions. In an embodiment, the actions are automatically processed through instructions provided by integrator 117 using API 119 for purposes of adjusting security applications within specific store departments and/or at specific store terminals.

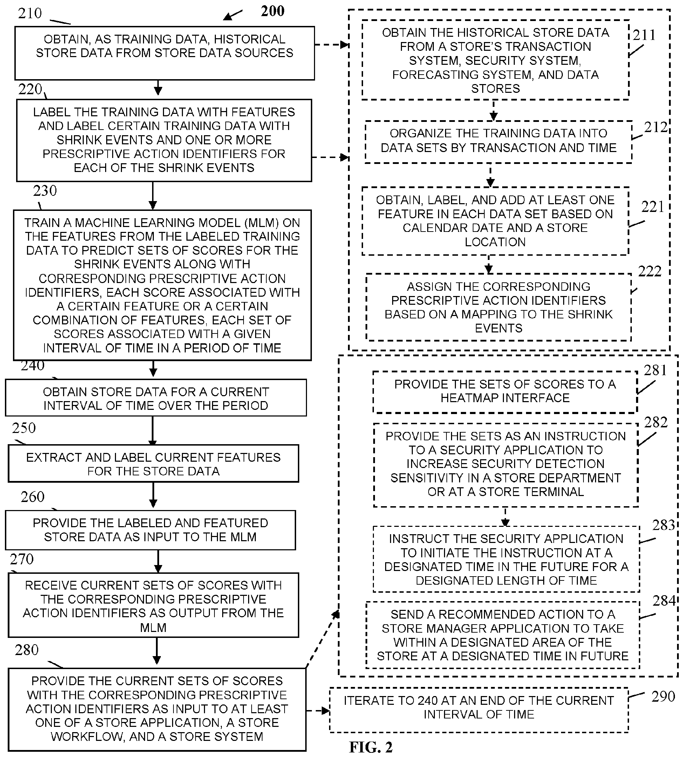

The above-discussed embodiments and other embodiments are now discussed with reference to FIGS. 2-3. FIG. 2 is a flow diagram of a method 200 for predicting risk associated with retail shrink and recommending and/or processing specific actions to mitigate any predicted shrink, according to an example embodiment. The software module(s) that implements the method 200 is referred to as a "shrink avoidance manager." The shrink avoidance manager is implemented as executable instructions programmed and residing within memory and/or a non-transitory computer-readable (processor-readable) storage medium and executed by one or more processors of one or more devices. The processor(s) of the device(s) that executes the shrink avoidance manager are specifically configured and programmed to process the shrink avoidance manager. The shrink avoidance manager has access to one or more network connections during its processing. The connections can be wired, wireless, or a combination of wired and wireless.

In an embodiment, the device that executes shrink avoidance manager is cloud 110. In an embodiment, the device that executes shrink avoidance manager is server 110. In an embodiment, the device that executes shrink avoidance manager is retail server 120. In an embodiment, the shrink avoidance manager is all of, or some combination of 113, 114, 115, 117, 118, and/or 119. In an embodiment, the shrink avoidance manager is provided to a retail server 120 and/or a user-operated device as a SaaS integrated via API calls from applications executed on the retail server 120 or the user-operated device, wherein the applications are associated with transaction system 123 and/or security system 124.

At 210, the shrink avoidance manager obtains historical data from store data sources to be used as training data. In an embodiment, at 211, the shrink avoidance manager obtains the historical data from a store's transaction system 123, a store's security system 124, a store's forecasting system 126, and employee and customer data stores 125.

In an embodiment of 211 and at 212, the shrink avoidance manager organizes the training data into training data sets by transaction and time. That is, the training data is logically organized into a collection of related data by transaction and time.

At 220, the shrink avoidance manager labels the training data with features, labels certain training data as being associated with shrink events, and further labels the training data labeled with shrink events with one or more prescriptive action identifiers corresponding to each of the shrink events based on a mapping between each shrink event and one or more prescriptive action identifiers.

In an embodiment of 212 and 220, at 221, the shrink avoidance manager obtains, labels, and adds at least one feature in each data set based on a calendar date and a store location. For example, historical weather data associated with the store's geographical location or zip code is obtained from a weather service assessable over the Internet. The weather data is then classified into categories such as sunny, windy, raining, stormy, and/or snowy. The weather data is also associated with temperature on a scale of hot, cool, cold, warm, or comfortable based on the recorded temperature for the store location. The weather categories and weather temperature and labeled and inserted into the data sets as added features that were not originally present in the historical store data.

As stated above and in an embodiment of 220 and 221, the shrink avoidance manager assigns the corresponding prescriptive action identifiers based on a mapping to the shrink events. A store can provide the mapping via an API where the store's shrink events are associated with recommended actions that if taken can mitigate the changes that a corresponding shrink event will happen.

At 230, the shrink avoidance manager trains a MLM 116 is trained on the features from the labeled training data to predict sets of scores for the shrink events along with corresponding prescriptive action identifiers. Each score is associated with a certain feature or a certain combination of features. Moreover, each set of scores is associated with a given interval of time in a period of time.

At 240, the shrink avoidance manager obtains store data for a current interval of time. This is live and real-time data being reported by the store or being reported for a last completed interval of time at the store. Again, the store data is collected from store systems 123, 124, and 126 and data stores 125. The store data is collected via API 119.

At 250, the shrink avoidance manager extracts and labels current features for the store data. Thus, features may be added as was discussed in embodiment 221. Furthermore, some features may be provided by security applications as output from MLMs. Examples of the features derived and added were discussed above.

At 260, the shrink avoidance manager provided the labeled and featured store data as input to the MLM 116. This occurs when training 230 has completed and the MLM 116 has reached a threshold f1 accuracy score such that the MLM 116 is being processed in production.

At 270, the shrink avoidance manager receives current sets of scores with the corresponding prescriptive action identifiers as output from the MLM 116. At 280, the shrink avoidance manager provides the current sets of scores with the corresponding prescriptive action identifiers as input to at least one of a store application, a store system (e.g., 123, 124, and/or 126), and a store workflow.

In an embodiment, at 281, the shrink avoidance manager provides the sets of scores to a heatmap interface. The heatmap interface includes a timeline function which permits color coded resources associated with the features to be animated over the period of time from the current interval of time.

In an embodiment, at 282, the shrink avoidance manager provides the sets as an instruction to a security application. The instruction when processed by the security application cause the security application to increase security detection sensitivity in a store department or at a store terminal. In an embodiment of 282 and at 283, the shrink avoidance manager instructs the security application to initiate the instruction at a designated time in the future for a designated length of time based on the interval of time associated with the score.

In an embodiment, at 284, the shrink avoidance manager sends a recommended action to a store manager application. The recommendation is an action for the manager to take within a designated area of the store and at a designated time in the future.

In an embodiment, at 290, the shrink avoidance manager iterates to 240 at an end of the current interval of time. This causes the store data to be updated and correspondingly the sets of scores and the prescriptive action identifiers with most-recent actual in-store data being processed for transactions at the store.

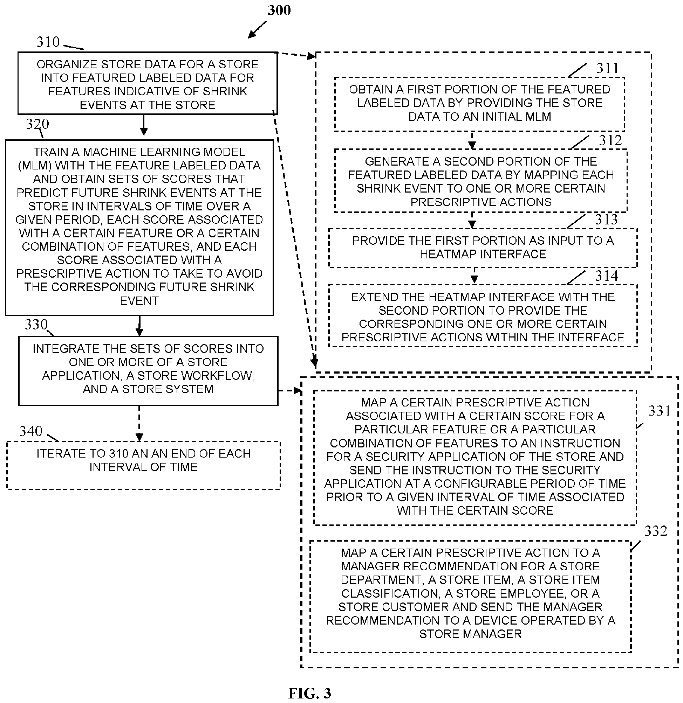

FIG. 3 is a flow diagram of another method 300 for predicting risk associated with retail shrink and recommending and/or processing specific actions to mitigate any predicted shrink, according to an example embodiment. The software module(s) that implements the method 300 is referred to as a "shrink avoidance recommendation manager." The shrink avoidance recommendation manager is implemented as executable instructions programmed and residing within memory and/or a non-transitory computer-readable (processor-readable) storage medium and executed by one or more processors of one or more devices. The processor(s) of the device(s) that executes the shrink avoidance recommendation manager are specifically configured and programmed to process the shrink avoidance recommendation manager. The shrink avoidance recommendation manager has access to one or more network connections during its processing. The network connections can be wired, wireless, or a combination of wired and wireless.

In an embodiment, the device that executes the shrink avoidance recommendation manager is cloud 110. In an embodiment, the device that executes the shrink avoidance recommendation manager is server 110. In an embodiment, the device that executes the shrink avoidance recommendation manager is retail server 120. In an embodiment, the shrink avoidance recommendation manager is provided to a retail server 120 and/or a user-operated device as a SaaS integrated into applications executing on the server 120 and/or user-operated device via APIs or API calls.

In an embodiment, the shrink avoidance recommendation manager is all of, or some combination of 113, 114, 115, 117, 118, 119, and/or method 200. The shrink avoidance recommendation manager presents another and, in some ways, enhanced processing perspective from that which was discussed above with the method 200 of the FIG. 2.

At 310, the shrink avoidance recommendation manager organizes store data for a store into featured labeled data for features indicative of shrink events at the store. The features were discussed above. Furthermore, as discussed above, some features can be added, and some features can be present in the store data such as metrics or output from security-based MLMs.

In an embodiment, at 311, the shrink avoidance recommendation manager obtains a first portion of the featured labeled data by providing the store data to an initial MLM. The first portion of featured labeled data returned as output from the initial MLM. In an embodiment of 311 and at 312, the shrink avoidance recommendation manager generates a second portion of the featured labeled data by mapping each shrink event to one or more certain prescriptive actions.

In an embodiment of 312 and at 313, the shrink avoidance recommendation manager provides the first portion of labeled featured data as input to a heatmap interface 118. In an embodiment of 313 and at 314, the shrink avoidance recommendation manager extends or enhances the heatmap interface 118 with the second portion to provide the corresponding one or more certain prescriptive actions within the interface 118. For example, color coded resources overlaid on a planogram for the store can be selected and a popup window displays the underlying prescriptive actions to take.

At 320, the shrink avoidance recommendation manager trains a MLM 118 with the featured labeled data and obtains sets of scores that predict future shrink events at the store in intervals of time over a given period of time. Each score is associated with a certain feature or a certain combination of features. Features or combinations of features are mapped to resources of the store. Further, each score is associated with at least one prescriptive action to take in order to avoid the corresponding future shrink event.

At 330, the shrink avoidance recommendation manager integrates the sets of scores into one or more of a store application, a store workflow, and a store system (e.g., 123, 124, and/or 126). This can be done in a variety of manners utilizing API 118.

In an embodiment, at 331, the shrink avoidance recommendation manager maps a certain prescriptive action associated with a certain score for a particular feature or a particular combination of features to an instruction for a security application of the store. The instruction is sent via API 118 to the security application at a configurable period of time prior to or that precedes a start of a given interval of time which is associated with the certain score.

In an embodiment, at 332, the shrink avoidance recommendation manager maps a certain prescriptive action to a manager recommendation for a store department, a store item, a store item classification, a store employee, or a store customer. The shrink avoidance recommendation manager sends the manager recommendation to a device operated by the store manager. The recommendation is sent in advance of the time associated with the predicted future shrink event so as to allow the manager to take the recommended action and avoid or at least catch the shrink event before it occurs or as it occurs.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method, comprising:
obtaining historical store data from store data sources as training data;
labeling the training data with features;
labeling at least a portion of the training data with shrink events and one or more prescriptive action identifiers for each of the shrink events;
training a machine learning model (MLM) on the features from the labeled training data to predict sets of scores for the shrink events along with corresponding prescriptive action identifiers, wherein each shrink score is associated with a certain feature or a certain combination of the features, and wherein each set of scores is associated with a given interval of time in a period of time;
obtaining store data for a current interval of time over the period of time;
extracting and labeling current features for the store data;
providing the labeled store data as input to the MLM;
receiving current sets of scores with the corresponding prescriptive action identifiers as output from the MLM, wherein each set corresponds to a particular interval of time within the period; and
providing the current sets of scores with the corresponding prescriptive action identifiers as input to at least one of a store application, a store workflow, or a store system.

2. The method of claim 1 further comprising, iterating to the obtaining of the store data at an end of the current interval of time.

3. The method of claim 1, wherein obtaining the historical store data further includes obtaining the historical store data from a store's transaction system, security system, forecasting system, and data stores.

4. The method of claim 3, wherein obtaining the historical store data further includes organizing the training data into data sets by transaction and time.

5. The method of claim 4, wherein labeling further includes obtaining, labeling, and adding at least one feature in each of the data sets based on a calendar date and a store location and optionally labeling further includes assigning the corresponding prescriptive actions identifiers based on a mapping to the shrink events.

6. The method of claim 1, wherein providing the current sets of scores further includes providing the sets of scores as an instruction to a security application to increase security detection sensitive in a store department or at a store terminal and optionally providing the current sets of scores further includes instructing the security application to initiate the instruction at a designated time in the future for a designated length of time.

7. The method of claim 1, wherein providing the current sets of scores further includes sending a recommended action to a store manager application to take at a designated area within the store at a designated time in the future.

8. A method, comprising:
organizing store data for a store into featured labeled data for features indicative of shrink events at the store;
processing a machine-learning model (MLM) with the feature labeled data and obtaining sets of scores that predict future shrink events at the store in intervals of time over a given period, wherein each score is associated with a certain feature or a certain combination of features, and wherein each score is associated with one or more prescriptive actions to take to avoid a corresponding future shrink event; and
integrating the sets of scores into one or more of a store application, a store workflow, or a store system.

9. The method of claim 8, further comprising, iterating to the organizing at an end of each interval of time.

10. The method of claim 8, wherein organizing further includes obtaining a first portion of the featured labeled data by providing the store data as input to an initial MLM and receiving as output from the initial MLM the portion.

11. The method of claim 10 further comprising, generating a second portion of the featured labeled data by mapping each shrink event to one or more certain prescriptive actions.

12. The method of claim 11 further comprising, providing the first portion of the featured labeled data as input to a heatmap interface.

13. The method of claim 12 further comprising, extending the heatmap interface with the second portion to provide the corresponding one or more certain prescriptive actions within the heatmap interface.

14. The method of claim 12, wherein integrating further includes mapping a certain prescriptive action associated with a certain score for a particular feature or a particular combination of features to an instruction for a security application of the store and sending the instruction to the security application prior to a given interval of time associated with the certain score and optionally integrating further includes mapping a certain prescriptive action to a manager recommendation for a store department, a store item, a store item classification, a store employee, or a store customer, and sending the manager recommendation to a device operated by a store manager.

15. A system, comprising:
a cloud server comprising at least one processor and a non-transitory computer-readable storage medium,
the non-transitory computer-readable storage medium comprising executable instructions,
wherein the executable instructions, when executed by the at least one processor cause the at least one processor to perform operations comprising:
processing a first machine learning model with store data during a current interval of time and receiving as output a set of scores, wherein each score predicts shrink events at a store by individual features and by combinations of the features;
iterating the processing for a next interval of time using forecasting data for the store until a further period of time is reached; and
providing the sets of scores produced for the period from the processing and the iterating to a store application, a store workflow, or a store system and optionally
providing the sets of scores to a heatmap interface that links the features to resources of the store within a planogram of the store and that colors the resources based on the corresponding scores, wherein the heatmap interface includes a timeline function to animate the planogram with the colored resourced over the period, and wherein when a given resource or a given combination of resources is selected a popup window displays the corresponding prescriptive actions necessary to avoid a corresponding shrink event.
